# EUROPÄISCHE PATENTANMELDUNG

(11) **EP 3 376 089 A1**
(43) Veröffentlichungstag der Anmeldung: **19.09.2018**
(21) Anmeldenummer: 17161412.6
(22) Anmeldetag: 16.03.2017
(51) Int. Cl.: F17C 1/00

(54) **SYSTEM ZUM SPEICHERN EINES ENERGIETRÄGERFLUIDS**

(71) Anmelder: H2 Energy AG, 8152 Glattpark (Opfikon) (CH)
(72) Erfinder: Dietrich, Philipp, 5417 Untersiggenthal (CH); Vock, Hansjörg, 9425 Thal (CH); Huber, Rolf, 8305 Dietlikon (CH); Blank, Norman, 8803 Rüschlikon (CH)
(74) Vertreter: Fischer, Michael

(57) **Zusammenfassung**

Die Erfindung offenbart ein System zum Speichern eines Energieträgerfluids, wie z.B. Wasserstoff, Methan, Methanol, CNG, usw., umfassend:
a) mindestens einen mit dem Energieträgerfluid aufblasbaren Speicherbehälter, der eine flexible und fluiddichte Hülle umfasst;
b) mindestens ein Stützelement für den Speicherbehälter, das eine Druckdifferenz zwischen einem Behälterinnendruck und einem auf den Speicherbehälter einwirkenden Aussendruck aufnimmt, vorzugsweise wenn der Behälterinnendruck grösser als der auf den Speicherbehälter einwirkende Aussendruck ist, und
c) ein mit dem mindestens einen Stützelement assoziiertes Ballastelement, das eine eventuell vorhandene Auftriebskraft des Speicherbehälters in seinem umgebenden Medium zumindest teilweise aufnimmt; und/oder
d) ein mit dem mindestens einen Stützelement assoziiertes Verankerungselement, die eine eventuell vorhandene Auftriebskraft des Speicherbehälters in seinem umgebenden Medium zumindest teilweise aufnimmt.

Auf diese Weise ist es möglich, Energieträgerfluide vergleichsweise preiswert und ohne grossen Aufwand speichern zu können. Besonders dann, wenn der Aussendruck in etwa dem Druck entspricht, mit dem das Energieträgerfluid in den Speicherbehälter eingefüllt wird, kann eine vergleichsweise hohe Verdichtung mit einem sehr kleinen Aufwand erzielt werden. Derartige Verhältnisse liegen beispielsweise bei einer Anordnung des Energiespeichers unter Wasser oder in einem umgebenden Druckbehälter vor.

## Beschreibung

Die vorliegende Erfindung bezieht sich auf ein System zum Speichern eines Energieträgerfluids.

### Beschreibung der Ausgangslage

Für eine saisonale Verschiebung von Energie vom Sommer in den Winter oder umgekehrt, bedarf es der Speicherung grosser Mengen von Energie (TWh). Dies kann durch Batterien oder über Energieträgerfluide, wie Gase (H₂, CH₄) oder flüssige Energieträger (Kohlenwasserstoffe, z.B. Methanol, Polyaromaten) erfolgen, die H2 in verschiedenen Formen aufnehmen können.

Bei der Nutzung von Photovoltaik und Wind fallen hohe Spitzen an Strom an, die je nach Witterung verfügbar sind und schnell stark variieren können. Zudem sind diese allenfalls mehrheitlich im Sommer- (Photovoltaik, Laufwasserkraft) oder eher im Winterhalbjahr (Wind an der Küste oder in Höhenlagen) verfügbar.

Zur Verwertung allfälliger Überschusselektrizität kann mit Hilfe von Elektrolyseuren Wasserstoff gewonnen werden. Der Wasserstoff dient als chemischer Energieträger, der mit vergleichsweise wenigen Umwandlungsschritten durch Elektrolyse erzeugt und wieder in Strom umgewandelt werden kann oder als eigenständiger Energieträger (z.B. in der Mobilität) genutzt werden kann.

### Stand der Technik

Wasserstoff kann gasförmig unter Druck, flüssig oder gebunden in anderen Materialen gespeichert werden.
Zur gasförmigen Speicherung von Wasserstoff ist die Verwendung von Druckflaschen für hohe Drücke (>100 bar) allgemein bekannt. Dabei können die Flaschen aus Stahl oder kohlefaserverstärkten oder weiteren Materialien gefertigt werden. Für Niederdrucktanks (bis ca. 50 bar) werden vielfach grossvolumige Stahltanks eingesetzt. Mobile Tanks (Trailer) werden aus kleineren oder grösseren Röhrentanks zusammengesetzt oder durch die Zusammenschaltung von Bündeln realisiert. Erste Ausführungen werden auch in Kohle- oder Glasfaser-Komposites ausgeführt, was die Masse der Behältnisse deutlich senkt, aber zumindest vorerst die Kosten stark steigen lässt.

Für grossvolumige Speicher werden Kavernenspeicher betrachtet (vgl. WO 2016/178729 A1 oder [1]). Dabei wird der Wasserstoff unter hohem Druck unterirdisch zwischengespeichert. Nachteilig an diesen Speichern ist die geografische Limitierung auf spezifische geologische Schichten und lange Prozesse, um die potentiellen Speichervolumen auszusolen. Zudem benötigen diese Speicher substantielle Kissengasvolumen, die zuerst in den Speicher gepumpt werden müssen und im Betrieb nicht zur Nutzung verfügbar sind.

Die Speicherung von flüssigem Wasserstoff erfordert ein tiefes Temperaturniveau von ca. 20 Kelvin. Diese Variante ist für längerfristige Speicherung nur sehr beschränkt einsetzbar, da Abdampfverluste bei 20 Kelvin nicht vermeidbar sind.

Die dritte Form Wasserstoff zu speichern ist die Einlagerung in Materialien (Hydride oder andere chemische Verbindungen). Hier muss berücksichtigt werden, dass für die Speicherung einerseits substanzielle Speichermaterialvolumen benötigt werden und je nach Material für die Einspeicherung oder Ausspeicherung nicht vernachlässigbare Wärmeströme und Temperaturniveaus gehandhabt werden müssen; sowie die anspruchsvolle Herstellung der Wasserstoffeinlagerungsverbindungen.

Die Verwendung von chemischen Verbindungen für die Umwandlung von Wasserstoff in flüssige oder gasförmige Moleküle, z.B. durch Hydrierung, wie z.B. in der amerikanischen Offenlegungsschrift US 2016/0301093 A1 offenbart. Dazu sind aber weitere Umwandlungsschritte nötig, die sowohl zusätzliche chemische Prozesseinrichtungen erfordern und leider auch energetische Verluste durch die chemische Umwandlung erzeugen. Möglich ist auch die Speicherung innerhalb von Liquid Organic Hydro-Carbons, wie in der Offenlegungssschrift DE112014005258 (A5) von Teichmann , Wasserscheid et al beschrieben, wo mittels 2 Katalysatoren H2 in flüssige Kohlenwasserstoffe ein- und ausgelagert werden kann.

Eine Speicherung bei Konstantdruck (siehe WO2016/175371 A1) zielt auf die Kombination einer gasförmigen und flüssigen Phase, um den Speicherdruck konstant zu halten.

### Neue Erfindung

Der vorliegenden Erfindung liegt ausgehend von diesem Stand der Technik die Aufgabe zugrunde, ein einfaches und kostengünstiges Speichersystem für Energieträgerfluide anzugeben, bei dem die einmal generierten Energieträgerfluide nicht chemisch umgewandelt werden müssen und zur Erzeugung von elektrischer Energie oder als Energieträger leicht wieder zur Verfügung gestellt werden können.

Die Speicherung von Energie in Form von Wasserstoff erfordert grosse Volumina, damit wird klar, dass ein Speicher sehr kostengünstig sein muss, um diese Menge preiswert speichern zu können.

Diese Aufgabe wird erfindungsgemäss durch ein System zum Speichern eines Energieträgerfluids, wie z.B. Wasserstoff direkt, oder gebunden in gasförmigen Verbindungen wie z.B. Methan, oder flüssigen Verbindungen wie z.B. Methanol, oder andere Kohlenwassserstoffe, erreicht durch:
a) mindestens einen mit dem Energieträgerfluid aufblasbaren/füllbaren Speicherbehälter, der eine flexible und fluiddichte Hülle umfasst;
b) mindestens einem Stützelement für den Speicherbehälter, das die Druckdifferenz zwischen einem Behälterinnendruck und dem auf den Speicherbehälter einwirkenden Aussendruck aufnimmt, vorzugsweise wenn der Behälterinnendruck grösser als der auf den Speicherbehälter einwirkende Aussendruck ist wie z.B. ein gasdichter, armierter Schlauch, und falls physikalisch erfoderlich
c) ein oder mehrere Ballastelemente, um eine eventuell vorhandene Auftriebskraft des Speicherbehälters in seinem umgebenden Medium zumindest teilweise aufzunehmen und/oder
d) ein assoziiertes Verankerungselement, das eine eventuell vorhandene Auftriebskraft des Speicherbehälters in seinem umgebenden Medium zumindest teilweise aufnimmt.
e) Je nach Ausgestaltung des Speichers beinhaltet die Erfindung Verbindungselemente, mit denen Teilspeicher zusammen verbunden werden können, so dass diese als Teilsysteme oder mit verschiedenen Trägermedien betrieben werden können.

Auf diese Weise ist es möglich, Energieträgerfluide vergleichsweise preiswert und ohne grossen Aufwand speichern zu können. Besonders dann, wenn der Aussendruck in etwa dem Druck entspricht, mit dem das Energieträgerfluid in den Speicherbehälter eingefüllt wird, kann eine vergleichsweise hohe Verdichtung mit einem sehr kleinen Aufwand erzielt werden. Derartige Verhältnisse liegen beispielsweise bei einer Anordnung des Energiespeichers unter Wasser oder in einem umgebenden Druckbehälter vor.

Die Hülle des Energiespeichers muss einerseits fluiddicht und andererseits aber auch strapazier- und widerstandfähig gegen allfällige Umwelteinflüsse sein. Je nach Materialeigenschaft könnte diese Hülle aus einer Schicht realisiert werden. Aus Kostengründen kann es besonders zweckmässig sein, wenn die Hülle aus mindestens zwei funktionalen Teilen aufgebaut ist, wobei eine innere Schicht fluidresistent ausgestaltet ist und die äussere Schicht die Festigkeit sicherstellt. Bei der fluidresistenten Innenschicht wird eine metallisierte Polymerfolie (z.B. Aluminium bedampft oder anderweitig abgeschieden) angewendet. Die äussere Schicht ist als schutz- und druckresistente Schicht ausgestaltet, die vorzugsweise auch mechanische Kräfte bei einem inneren Überdruck übernehmen kann. Weitere Schichten können die beiden Funktionsschichten umgeben, um die Eigenschaften der Speicherhülle in verschiedener Hinsicht zu verbessern (z.B. Haftung zwischen den Schichten, Wasserbeständigkeit, Biegefähigkeit usw.) und Krafteinleitungspunkte für Lage-positionierung der Speicherelemente.

Weiter kann die innere und/oder äussere Schicht der Hülle mit Zusatzmaterialien beschichtet sein, um die Haftung zwischen den beiden Schichten zu erhöhen. Hierbei kann es auch vorgesehen sein, dass die Haftung zwischen den beiden Schichten durch einen chemischen Prozess erzeugt wird, z.B. Vulkanisieren.

Der druckfeste Speicher wird durch eine Hülle umspannt, die zum Beispiel durch ein Nylongewebe die resultierenden mechanischen Kräfte aus dem Druckunterschied aufnehmen kann. Dieses Geflecht kann auch so ausgestaltet werden, dass es einerseits biegbar bleibt und andererseits mit Angriffspunkten versehen werden kann, an denen die Beschwerung des Speichervolumens verankert werden kann. Wird die Innenschicht eines länglichen Speichers mit einer Sperrschicht für das zu speichernde Gas ausgestaltet und nimmt eine der äusseren Schichten die mechanischen Kräfte auf, so könnte eine Ähnlichkeit zu einem Wasserschlauch für Schneekanonen abgeleitet werden.

Bezüglich der Form des Speicherbehälters, werden derzeit die grössten Vorteile in Bezug auf das speicherbare Volumen und die Platzierung des Speicherbehälters unter Wasser gesehen, wenn der Speicherbehälter ballonförmig oder schlauchförmig ausgestaltet ist.

Schlauchförmige Speicher können auch zum Transport von geringeren Gasmengen verwendet werden, wenn das Handling eher durch das Gewicht schwerer Gasflaschen limitiert wird und weniger durch das Volumen des Speichers.

Eine besonders einfache Skalierbarkeit des Systems hinsichtlich des speicherbaren Fluidvolumens ergibt sich, durch eine Vielzahl von Speicherbehältern, die durch ein Rohrsystem (Manifold) verbunden werden. Dabei ist es u.a. eine Frage der Dimensionierung des Rohrsystems und der erwarteten Befüllungs- und/oder Entleerungsparameter, ob die Speicherbehälter in Serie oder parallel mit dem Rohrsystem zusammengeschaltet ausgeführt werden.

Eine spezifische Ausführung besteht in der Verwendung von langen schlauchähnlichen Speichern. Die einzelnen, auf einer Seite geschlossenen Schläuche werden an einem Interface(Manifold) zusammengeschlossen, so dass ein grösseres zusammenhängendes Volumen entsteht, das durch die Flexibilität der Schläuche auch für die Platzierung Vorteile bringt. Um das maximale Volumen dieser Schläuche ausnützen zu können, sind gegenseitige Verhakungen auszuschliessen. Dies kann durch zweckmässige Abstandshalter erreicht werden.

Eine Zusammenführungseinheit kann derart gestaltet werden, dass Teilvolumen mit Ventilen abgetrennt werden können. Damit kann im Falle einer Leckage der schadhafte Teil eines Speichers isoliert werden. Zudem kann durch eine gezielte Selektion der einzelnen Teilspeicher die Möglichkeit geschaffen werden, einen variablen Speicher zu betreiben, der auch mit unterschiedlichen Gasen/Fluids befüllt werden kann. Dies kann dann vorteilhaft sein, wenn das Speichervolumen in den Teilspeichern viel grösser ist als in der Verbindungsleitung zur Speicherstation am Land.

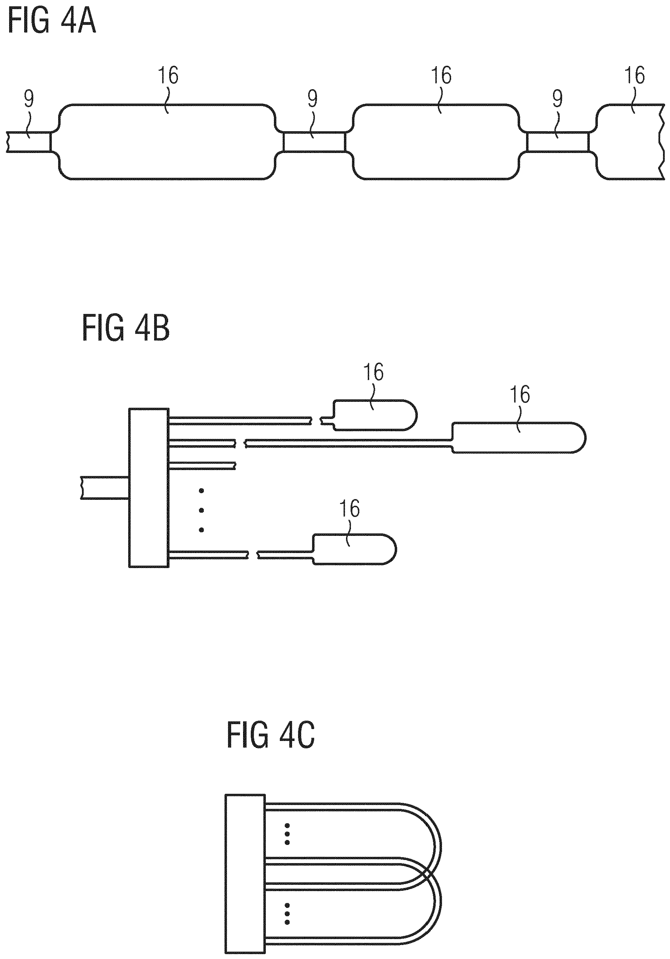

Die Anzahl der Anschlüsse der Speichervolumina kann reduziert werden, wenn die einzelnen Speichervolumen grösser gewählt werden. Eine Ausführungsform stellt die Ausgestaltung der Speicher in U-Form dar (Figur 4c).

Der Speicher kann vorzugsweise unter Wasser platziert werden. Typischerweise kann dies in einem See oder im Meer erfolgen. Wenn der Aussendruck in etwa dem Druck entspricht, mit dem das Energieträgerfluid in den Speicherbehälter eingefüllt wird, kann eine vergleichsweise hohe Verdichtung mit einem sehr kostengünstigen Speicherbehälter erzielt werden, da keine grossen resultierenden Kräfte auf die Speicherhülle wirken. Anders als bei herkömmlichen Erdgasspeichern über der Erde, kann die Hülle elastisch ausgeführt sein, um den erforderlichen Aussendruck für das selbsttätige Ausströmen des gespeicherten Gases (Fluids) aufzubringen. Es reicht bei der erfindungsgemässen Lösung aus, wenn der Aussendruck grösser als der Innendruck ist, um das Fluid weitgehend austreiben zu können. Zusätzlich kann es vorgesehen sein, dass das Verankerungselement verstellbar zur Bereitstellung einer variablen Tiefenfixierung des Speicherbehälters ausgestaltet ist. Auf diese Weise können unterschiedliche auf den Speicherbehälter einwirkende Drücke bedarfsweise eingestellt werden. Dabei können im Besonderen durch die variable Tiefenfixierung Drücke einstellbar sein, die niedriger zum Füllen des Speicherbehälters und grösser zum Speichern und/oder Entleeren des Speicherbehälters sind. Der Speicherbehälter wird also unter Wasser weniger tief zum Befüllen und danach tiefer zur Speicherung des Energieträgerfluids angeordnet. Die Tiefenfixierung kann motorisch ausgestaltet sein und dementsprechend von einer Systemsteuerung von aussen angesteuert werden.

Bei einer Anordnung des Speicherbehälters unter Wasser entwickelt dieser proportional zum Füllvolumen eine Auftriebskraft. Diese Auftriebskraft ist besonders materialschonend für die Hülle beherrschbar, wenn das Stützelement direkt mit einem Ballastelement und/oder dem Verankerungselement verbunden ist. In einer besonders vorteilhaften Ausgestaltung der Erfindung kann daher vorgesehen werden, dass an die Stützelemente verstärkt ausgeführten Haltepunkten platziert werden, an die ein Netz aus Seilen (z.B. auch Stahlseilen) gekoppelt wird und dieses vorzugsweise mit Ballastelementen und/oder Verankerungselementen verbunden wird. Besonders die verstärkten Haltepunkte können sicherstellen, dass die Hülle nicht an den Haltepunkten ausreisst.

Eine weitere Analogie kann zu einem Heissluftballon gezogen werden, in dessen Hülle ebenfalls Seile eingelassen sind, die die Gondel tragen. Übertragen werden mit den eingelassenen Kontaktpunkten die Beschwerungselemente des Speichers verbunden, die den Speicher am Boden halten.

Ein käfigartiger Schutz für die Speicherbehälter kann sich ergeben, wenn die Haltekonstruktion mit schwereren Rohrsegmenten realisiert ist, die eine zylindrische Stützform gegen oben und/oder unten bilden, wobei mindestens ein Ballastelement mit der Haltekonstruktion verbunden ist.

Eine Feinabstimmung bezüglich des Aussendrucks auf den Speicherbehälter und des erforderlichen Befüllungsdrucks sowie der Ausströmgeschwindigkeit kann erzielt werden, wenn der Speicherbehälter zur Einstellung eines vergleichsweise über den gesamten Behälter gleichmässig verteilten Aussendrucks in einer definierten Tiefe unter Wasser angeordnet ist. So kann beispielsweise die Tiefe der Anordnung so gewählt werden, dass der im Elektrolyseur herrschende Druck von dem Aussendruck nicht ganz egalisiert wird und so ein Befüllen des Speicherbehälters ohne zusätzliche Druckbeaufschlagung möglich ist, während der Aussendruck zum Entleeren des Speicherbehälters immer noch komfortabel genug hoch ist.

Weitere vorteilhafte Ausgestaltungen der vorliegenden Erfindung sind den übrigen Unteransprüchen zu entnehmen.

Bevorzugte Ausführungsbeispiele der Erfindung werden nachfolgend näher mit Bezug auf die anhängenden Zeichnungen erläutert. Diese Zeichnungen zeigen in:
Figur 1 eine schematische Darstellung eines unter Wasser angeordneten Speicherballons für Wasserstoffgas;
Figur 2 eine schematische Darstellung eines Speichersacks mit stützendem Metallrahmen und Beschwerungskörpern;
Figur 3 eine schematische Darstellung einer Anzahl von Speicherschläuchen mit Beschwerungskörpern;
Figur 4 eine schematische Darstellung von unterschiedlich gehaltenen Speicherballons a) bis c);
Figur 5 eine schematische Darstellung eines Speicherschlauchs mit zweischichtig aufgebauter Hülle; und
Figur 6 eine schematische Darstellung eines Speicherballons mit in die Hülle integriertem Verstärkungsnetz und einklinkbarer Lagerung.

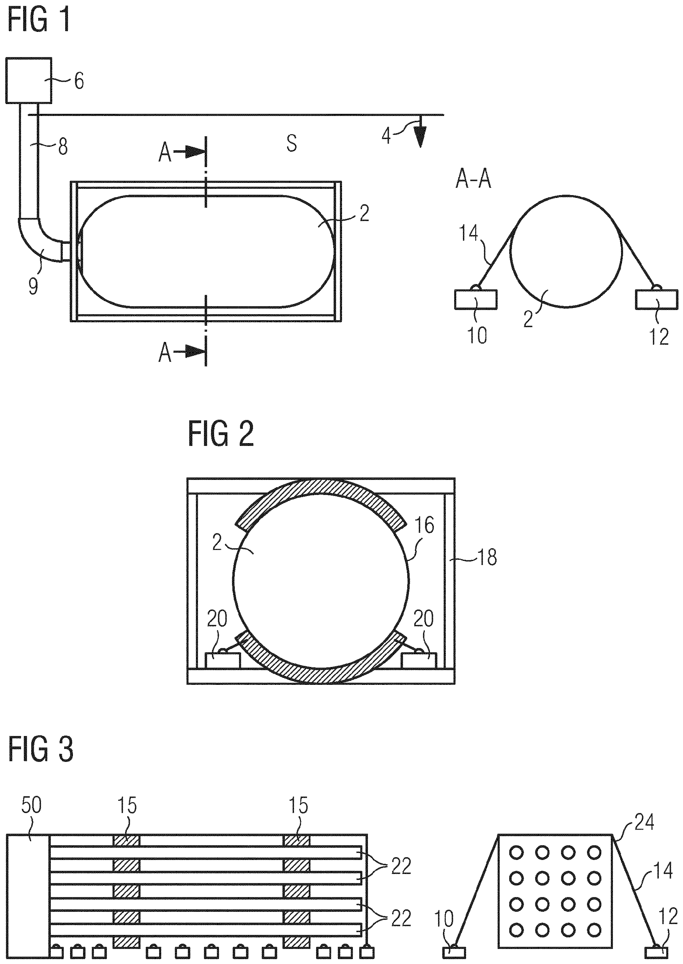

Der Kerngedanke der vorliegenden Erfindung besteht darin, kostengünstige grossvolumige Fluidspeicher mit einer flexiblen Hülle darzustellen, wobei diese Speichervolumen in den nachfolgend gezeigten Ausführungsbeispielen auch unter Wasser angeordnet werden können. Wie für ein entsprechendes System S in Figur 1 schematisch gezeigt, ist ein aufblasbarer Speicherballon 2 in einem See 4 versenkt angeordnet. Der Wasserdruck drückt den Speicherballon 2 je nach Füllstand zusammen, wobei der Wasserdruck von der Tiefe der Position des Speicherballons 4 abhängt.

Der Speicherballon 2 wird mittels einer an Land angeordneten Einspeicher- und Ausspeicherstation 6, die auch einen hier nicht weiter dargestellten Elektrolyseur umfassen kann, über eine zunächst starre Anschlussleitung 8 und dann flexible Anschlussleitung 9 mit komprimiertem Wasserstoffgas gefüllt oder entleert. Zur Kompensation des Auftriebs sind Fundamente 10, 12 angeordnet (es können auch nicht im Seeboden verankerte Beschwerungskörper vorgesehen sein), von denen aus ein Haltemittel (z.B. Seil) 14 den Speicherballon 2 überspannt.

Das gleiche Speicherelementsystem kann auch für Anwendungen an der Umgebungsluft angewendet werden. Die Ausströmgeschwindigkeit wird dabei allerdings durch die fehlende Druckbeaufschlagung bei tieferen Drücken abnehmen.

Für die Hülle des Speicherballons 2 kann eine Ein-oder Mehrschicht-Faserverstärkte Kunststoff-Folie oder ein spezielles Flies oder ein andersartiges flexibles Material verwendet werden. Das Material muss wasserresistent und fluidgasdicht für das spezifische zu speichernde Gas/Fluid sein. Die Zugbelastung des Hüllenmaterials hängt von der Grösse und dem Druck im Speicherballon 2 ab. Um grosse Volumina zu speichern ist von einem Durchmesser bis zu einigen Metern (0.05-10 m), typisch 3-5 m, auszugehen. Je tiefer der Speicherballon 2 im Wasser versenkt wird, umso weniger wird das Hüllenmaterial auf Zug beansprucht, da der Aussendruck dem Speicherdruck entgegenwirkt. Da ein Elektrolyseur üblicherweise mit einem Druck von 30 bis 50 bar betrieben werden kann, kann der Speicherballon 2 in einer Tiefe angeordnet werden, in der der Wasserdruck annähernd so gross ist wie der Betriebsdruck des Elektrolyseurs.

Typische Fülldrücke für den Speicher reichen von 20 bis 100 bar, typischerweise um 25-35 bar. Damit können diese Speicher in Seetiefen von 250-350 m so betrieben werden, dass das Hüllenmaterial nicht oder nur wenig auf Zug beansprucht wird.

Durch die geringe Dichte des gespeicherten Wasserstoffgases müssen die Auftriebskräfte ausgeglichen werden und der Speicherballon muss an seinem Bestimmungsort so platziert und verankert werden können, dass keine Beschädigungen des Speicherballons 2 entstehen können. Zu diesem Zweck ist das Haltemittel 14 um den Speicherballon 2 angeordnet, das durch kostengünstige Materialien, wie Sand, Kies oder auch andere Materialien als Ballaststoffe 10, den Speicherballon beschweren und am Aufsteigen hindern (siehe auch Figur 1). Die Figur 3 zeigt zudem ein Beispiel einer Vielzahl von Speicherballons 22, die in nicht dargestellte Weise fluidmässig parallel geschaltet und unter einem Haltemittel 14 gehalten sind. In das Haltemittel 14 sind noch Flächenelemente 24 eingeordnet, die mit weiteren Beschwerungskörpern 12 belastet sind und zudem an weiteren Fundamenten 10 aufgehängt sind. Beschwerungskörper können auch lose Volumina von aufgeschüttetem Sand und/oder Kies oder ähnlichem losen Beschwerungsgut sein.

Eine Haltekonstruktion kann einerseits aus Metallrohrsegmenten bestehen, die eine zylindrische Hülle nach oben um vor herunterfallenden/-schwebenden Teilen im Wasser zu schützen und/oder nach unten um die Hülle vor Unebenheiten des Bodens zu schützen, bildet (Figur 2). Gleichzeitig können an diesen Bogensegmenten Beschwerungselemente fixiert werden, die den Speicherballon 2 in seiner Lage halten. Diese Beschwerungselemente können aus mit Sand oder Steinen gefüllten Behältnissen bestehen oder als Betonklötze ausgestaltet sein, die mit einem Seil/Gurt oder als Stangenkonstruktion mit den Rohrsegmenten verbunden sind. Die Figuren 2 und 3 zeigen schematisch weitere Möglichkeiten für die Ausbildung des Speichervolumens in Form eines Speichersacks 16 mit Stahlrohrrahmen 18 und Beschwerungselementen 20 (Figur 2) bzw. in Form von Speicherschläuchen 22, die in einem beschwerten Element 24 gehalten sind (Figur 3).

Eine weitere Möglichkeit zur Gestaltung der Haltekonstruktion besteht darin, diese Haltekonstruktion für das Speichervolumen ebenfalls aus einem Textilgeflecht herzustellen. Dann muss dieses Textilgeflecht die Schutzfähigkeit gegen Scheuerbelastung und scharfe Kanten/Spitzen der Bodenoberfläche gewährleisten.

Wie in Figur 1 gezeigt, kann die Anschlussleitung 8 an das Speichervolumen 2, 16, 22 steif gewählt werden mit einem anschliessenden flexiblen Anschlussabschnitt 9. Der Anschluss kann je nach Erfordernis auch direkt mit einem flexiblen Anschlussabschnitt 9 beginnen. Für die Anwendung eines saisonalen Energiespeichers, der im Wasser versenkt ist, sind die Füll- und Entleerzeiten typischerweise mit 100 bis 2000 Stunden anzunehmen, typischerweise liegen sie bei 1000 h/Jahr. Damit kann, in Zusammenhang mit einem gleichbleibenden Druck im Speichervolumen, verursacht durch den in erster Näherung konstant angenommenen Aussendruck, der Rohrdurchmesser stark limitiert werden (10- 50 mm). Dadurch können auch die Anschlusskosten reduziert werden.

Eine Zusammenführung von mehreren Anschlussleitungen aus verschiedenen Teilspeichern (siehe schematisch in Figur 3 und 4b) bietet sich an der Oberfläche oder in Ufernähe an. Eine Zusammenführung ist auch unter dem Wasser realisierbar.

Eine weitere Möglichkeit besteht in der lokalen Koppelung einer rechenartigen Kupplung (serielle Verbindung) von Teilspeichern (Figur 4a). Durch die Zwischenschaltung eines flexiblen Anschlussabschnitts 9 kann die Ausgestaltung des Speichervolumens an die Topologie (z.B. Seebodens) angepasst werden. Dabei können die Teilspeicher in einer Lage über die Bodenfläche des Gewässers verteilt werden, sie können aber auch gestapelt übereinander angeordnet werden. Bei einer gestapelten Anordnung ist in Betracht zu ziehen, dass die Drücke innerhalb der einzelnen Lagen unterschiedlich sein können.

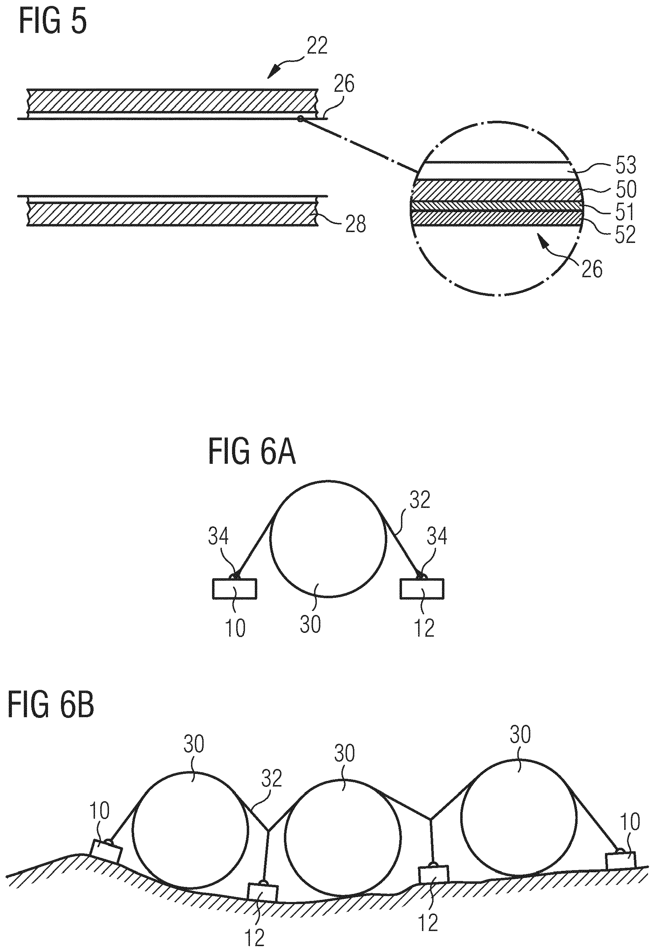

Figur 5 zeigt schematisch einen Speichersack 22 mit einer mindestens zweischichtig aufgebauten Hülle. Während eine innere Schicht 26 als gasdichte Schicht für Wasserstoff und/oder Methangas oder Ähnliches ausgestaltet ist, kann eine äussere Schicht 28 als schützende und/oder stützende Kunststoffschicht ausgestaltet sein. Die innere Schicht 26 setzt sich aus einer Trägerschicht 50 und einer gasdichten metallischen Zwischenschicht 51 zusammen. Optional kann die gasdichte Schicht 51 mit einer zusätzlichen Schutzschicht überzogen werden. Zwischen der Trägerschicht und der äusseren Schicht 28 können weitere Schichten 53 platziert werden, die die Übertragung der mechanischen Kräfte bei den Schichten 26 und 28 ermöglicht.

Figur 6 zeigt eine schematische Darstellung eines Speicherballons 30 mit in die Hülle integriertem Verstärkungsnetz 32, welches mittels lösbaren Verbindungen 34 in die Fundamente 10, 12 gekoppelt werden kann. Figur 6b zeigt schematisch die Darstellung einer Beschwerungseinrichtung, die über verschiedene Speicher 30 gespannt ist und mit den Beschwerungsgewichten dem Auftrieb entgegenwirken.

Neben Wasserstoff kann diese Speicherform auch für andere Gase/Fluide genutzt werden, sei dies im Energiebereich v.a. Methan, oder andere Gase, die zur Lagerung von H2 genutzt werden oder andere inerte Gase. Das Hüllenmaterial muss auf die Interaktion und die Dichtfähigkeit gegenüber dem zu speichernden Fluid und die Aussenatmosphäre angepasst werden.

### Literatur:

[1] U. Bünger et al: "Studie über die Planung einer Demonstrationsanlage zur Wasserstoff-Kraftstoffgewinnung durch Elektrolyse mit Zwischenspeicherung in Salzkavernen unter Druck", Stuttgart 5.2.2015, LBST, KBB, DLR, Fraunhofer ISE

## Patentansprüche

1. System zum Speichern eines Energieträgerfluids, wie z.B. Wasserstoff, Methan, Methanol, CNG, usw., umfassend:
a) mindestens einen mit dem Energieträgerfluid aufblasbaren Speicherbehälter, der eine flexible und fluiddichte Hülle umfasst;
b) mindestens ein Stützelement für den Speicherbehälter, das die Druckdifferenz zwischen einem Behälterinnendruck und einem auf den Speicherbehälter einwirkenden Aussendruck aufnimmt, vorzugsweise wenn der Behälterinnendruck grösser als der auf den Speicherbehälter einwirkende Aussendruck ist, und
c) ein mit mindestens einem Stützelement assoziiertes Ballastelement, das eine eventuell vorhandene Auftriebskraft des Speicherbehälters in seinem umgebenden Medium zumindest teilweise aufnimmt; und/oder
d) ein mit dem mindestens einen Stützelement assoziiertes Verankerungselement, das eine eventuell vorhandene Auftriebskraft des Speicherbehälters in seinem umgebenden Medium zumindest teilweise aufnimmt.

2. System nach Anspruch 1,
**dadurch gekennzeichnet, dass**
die Hülle aus zwei Schichten aufgebaut ist, wobei eine innere Schicht fluiddicht ausgestaltet ist und eine äussere Schicht als Schicht zur Aufnahme der mechanischen Belastung ausgestaltet ist.

3. System nach Anspruch 1 oder 2,
**dadurch gekennzeichnet, dass**
der Speicherbehälter ballonförmig oder schlauchförmig ausgestaltet ist.

4. System nach einem der vorangehenden Ansprüche 1 bis 3,
**dadurch gekennzeichnet, dass**
die Hülle aus einem Material beschaffen ist.

5. System nach einem der vorangehenden Ansprüche 1 bis 4,
**dadurch gekennzeichnet, dass**
eine Vielzahl von durch ein Rohrsystem verbundene Speicherbehälter vorgesehen sind.

6. System nach einem der vorangehenden Ansprüche 1 bis 5,
**dadurch gekennzeichnet, dass**
das Stützelement direkt mit dem Ballastelement und/oder dem Verankerungselement verbunden ist.

7. System nach einem der vorangehenden Ansprüche 1 bis 6,
**dadurch gekennzeichnet, dass**
das Stützelement als Netz aus Seilen realisiert ist und an vorzugsweise verstärkt ausgeführten Haltepunkten mit dem Ballastelement und/oder dem Verankerungselement verbunden ist.

8. System nach einem der vorangehenden Ansprüche 1 bis 7,
**dadurch gekennzeichnet, dass**
das Stützelement als Haltekonstruktion mit Metallrohrsegmenten realisiert ist, die eine zylindrische Stützform gegen oben und/oder unten bilden, wobei mindestens ein Ballastelement mit der Haltekonstruktion verbunden ist.

9. System nach einem der vorangehenden Ansprüche 1 bis 8,
**dadurch gekennzeichnet, dass**
das Energieträgerfluid mithilfe des in einem Elektrolyseur herrschenden Druckes in den Speicherbehälter eingefüllt wird.

10. System nach einem der vorangehenden Ansprüche 1 bis 9,
**dadurch gekennzeichnet, dass**
der Speicherbehälter zur Einstellung eines vergleichsweise über den gesamten Behälter gleichmässigen Aussendrucks in einer definierten Tiefe unter Wasser angeordnet ist, wobei das Verankerungselement vorzugsweise verstellbar zur Bereitstellung einer variablen Tiefenfixierung des Speicherbehälters ausgestaltet ist, und wobei vorzugsweise durch die variable Tiefenfixierung Drücke einstellbar sind, die niedriger zum Füllen des Speicherbehälters und grösser zum Speichern und/oder Entleeren des Speicherbehälters sind.

11. System nach einem der vorangehenden Ansprüche 1 bis 10,
**dadurch gekennzeichnet, dass**
die innere Schicht der Hülle mit einer metallischen Beschichtung versehen ist, die vorzugsweise aus Aluminium oder anderen gasresistenten Metallen besteht.

12. System nach einem der vorangehenden Ansprüche 1 bis 11,
**dadurch gekennzeichnet, dass**
die innere oder äussere Schicht der Hülle mit Zusatzmaterialien beschichtet ist, um die Haftung zwischen den beiden Schichten zu erhöhen.

13. System nach einem der vorangehenden Ansprüche 11 oder 12,
**dadurch gekennzeichnet, dass**
die Haftung zwischen den beiden Schichten durch einen chemischen Prozess erzeugt wird, z.B. Vulkanisieren.

14. System nach einem der vorangehenden Ansprüche 1 bis 13,
**dadurch gekennzeichnet, dass**
die Zusammenführung von Teilspeichern durch Verschlussaktoren steuerbar ist.

15. System nach einem der vorangehenden Ansprüche 1 bis 14,
**dadurch gekennzeichnet, dass**
Teilspeicher durch chemisch unterschiedliche Fluide füllbar sind.

16. System nach einem der vorangehenden Ansprüche 1 bis 15,
**dadurch gekennzeichnet, dass**
die Verschlussaktoren innerhalb einer Zusammenführungseinheit platziert sind, so dass sie nicht dem Umgebungsmedium ausgesetzt sind.

17. System nach einem der vorangehenden Ansprüche 1 bis 16,
**dadurch gekennzeichnet, dass**
die einzelnen Teilspeicher so an eine Zusammenführungseinheit gekoppelt sind, dass sie am Betriebsstandort gewechselt werden können ohne den ganzen Speicher ausser Betrieb nehmen zu müssen.
